(19) Europäisches Patentamt
European Patent Office
Office européen des brevets

(11) **EP 1 240 710 B1**

(12) **FASCICULE DE BREVET EUROPEEN**

(45) Date de publication et mention
de la délivrance du brevet:
**06.06.2007 Bulletin 2007/23**

(51) Int Cl.:
*H02P 6/18* *(2006.01)* *H02K 29/12* *(2006.01)*

(21) Numéro de dépôt: **00987399.3**

(86) Numéro de dépôt international:
**PCT/EP2000/012702**

(22) Date de dépôt: **12.12.2000**

(87) Numéro de publication internationale:
**WO 2001/045248 (21.06.2001 Gazette 2001/25)**

(54) **PROCEDE DE DETERMINATION DE LA POSITION ANGULAIRE DU ROTOR A AIMANT PERMANENT D'UN MOTEUR ELECTRIQUE POLYPHASE**

VERFAHREN ZUR MESSUNG DER WINKELLAGE EINES ROTORS FÜR MEHRPHASIGE DAUERMAGNETMOTOREN

METHOD FOR DETERMINING ANGULAR POSITION OF A PERMANENT MAGNET ROTOR OF A POLYPHASE ELECTRIC MOTOR

(84) Etats contractants désignés:
**AT BE CH CY DE DK ES FI FR GB GR IE IT LI LU MC NL PT SE TR**

(30) Priorité: **15.12.1999 EP 99125017**

(43) Date de publication de la demande:
**18.09.2002 Bulletin 2002/38**

(73) Titulaire: **Bien-Air Holding SA**
**2504 Bienne (CH)**

(72) Inventeur: **VOILLAT, Jean-Pierre**
**CH-2857 Montavon (CH)**

(74) Mandataire: **Surmely, Gérard et al**
**I C B**
**Ingénieurs Conseils en Brevets SA,**
**Rue des Sors 7**
**2074 Marin (CH)**

(56) Documents cités:
**EP-A- 0 793 337       WO-A-00/04631**
**FR-A- 2 697 696**

**Description**

La présente invention concerne un procédé de détermination de la position angulaire du rotor à aimant permanent d'un moteur électrique polyphasé comprenant au moins deux enroulements statoriques. La détermination exacte de la position angulaire du rotor d'un moteur électrique est souhaitée, voire nécessaire pour plusieurs applications, notamment dans le domaine de la robotique et pour des dispositifs présentant des outils tournants tels ceux utilisés pour les soins dentaires et la microchirurgie.

Il est connu pour déterminer la position angulaire d'un rotor à aimant permanent d'agencer trois capteurs de Hall décalés de 120° qui fournissent sensiblement trois courbes sinusoïdales déphasées de 120°. Il est également possible d'agencer sur l'axe du rotor un encodeur de position permettant d'obtenir une certaine précision dans la détermination de la position angulaire du rotor. Ces agencements nécessitent l'ajout de capteurs qui rendent le dispositif plus encombrant, ce qui est un inconvénient majeur pour les dispositifs de petites dimensions intégrant des micromoteurs.

Il est également connu qu'une génératrice fournit des signaux de tension induite dont l'amplitude est proportionnelle à la vitesse de rotation du rotor. Ainsi, dans le cadre d'un moteur à aimant permanent triphasé, il est possible de stopper l'alimentation du moteur de manière périodique durant de courts intervalles de manière à pouvoir extraire des informations de tension induite permettant de déterminer la position du rotor ou/et sa vitesse. Cette dernière méthode de détermination de la position angulaire d'un rotor présente un inconvénient majeur étant donné que l'information ne peut être obtenue que lorsque le rotor tourne à une certaine vitesse, par exemple d'environ 1'000 tours/min. Ainsi, à basse vitesse ou pour des rotations d'un angle relativement petit, aucune information ne peut être déduite sur la base des tensions induites dans les enroulements du moteur.

Le but de la présente invention est de pallier les inconvénients de l'art antérieur susmentionné en évitant un dispositif de détection de position angulaire qui soit encombrant et en fournissant un procédé de détection de la position angulaire d'un rotor quelle que soit sa vitesse de rotation et le chemin angulaire parcouru.

Ce but est atteint par le procédé selon la revendication 1 ci-jointe.

Dans le cadre du développement ayant conduit à la présente invention, l'inventeur a observé que le signal de mesure décrit dans la revendication 1 comporte une information relative à une variation périodique de l'inductance effective de l'enroulement dans lequel le signal alternatif est fourni et ceci en fonction de la position angulaire du rotor à aimant permanent, notamment bipolaire.

Par un traitement approprié du signal de mesure, le procédé selon l'invention permet de déterminer avec une bonne précision la position angulaire du rotor quelle que soit sa vitesse de rotation et même à l'arrêt. Grâce à ce procédé, il est possible de commander le moteur de manière à effectuer des chemins angulaires relativement petits avec une grande précision.

La présente invention sera mieux comprise à l'aide de la description suivante de modes de mise en oeuvre du procédé selon l'invention et des moyens permettant sa mise en oeuvre, faite en référence aux dessins annexés donné à titre d'exemples nullement limitatifs, dans lesquels :

- les figures 1 et 2 montrent la variation d'inductance dans un enroulement statorique par une variation de fréquence dans un oscillateur LC associé aux enroulements statoriques;
- les figures 3 et 4 montrent respectivement deux modes de réalisation d'un rotor utilisé dans le cadre de la présente invention;
- la figure 5 représente partiellement un premier mode de réalisation d'un système de détection de la position angulaire d'un rotor selon l'invention;
- les figures 6 à 9 montrent un deuxième mode de réalisation d'un système de détection selon l'invention et servent à exposer un mode de mise en oeuvre préféré du procédé de détection de la position d'un rotor selon l'invention;
- la figure 10 représente schématiquement un circuit de correction des courbes de mesure utilisées dans le procédé selon l'invention;
- les figures 11 et 12 exposent une méthode selon l'invention pour la sélection d'une valeur de mesure parmi trois signaux de mesure obtenus;
- la figure 13 montre une première variante pour déterminer la position angulaire du rotor en fonction de la valeur de mesure sélectionnée, et
- la figure 14 montre schématiquement les moyens de mise en oeuvre d'une deuxième variante pour déterminer la position angulaire du rotor en fonction de la valeur de mesure sélectionnée.

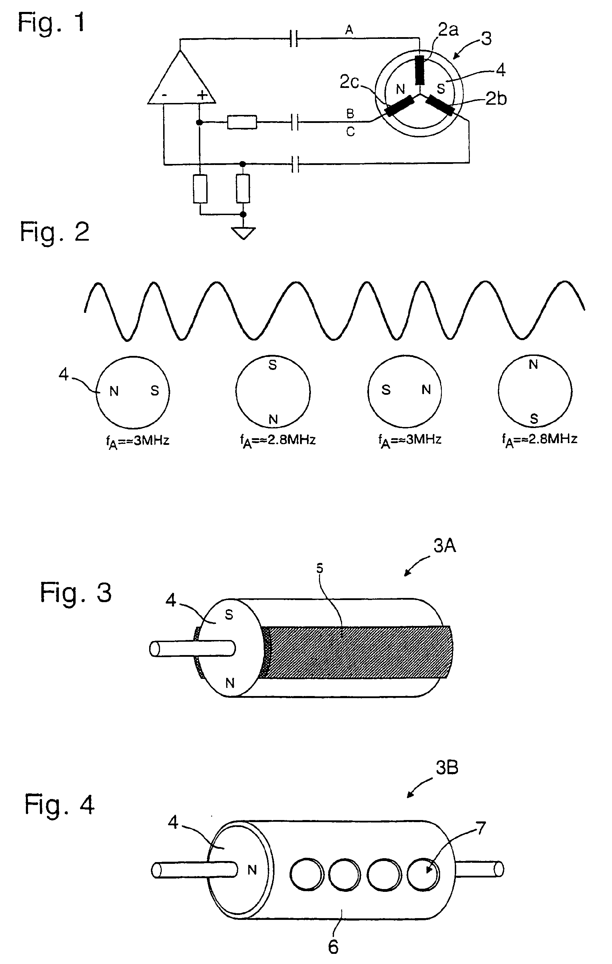

Le circuit électronique représenté à la figure 1 forme un oscillateur LC dans lequel l'inductance est définie par les enroulements 2a, 2b et 2c d'un moteur électrique dont le rotor 3 comprend un aimant permanent bipolaire 4. Le circuit de la figure 1 permet d'entretenir une oscillation variant notamment entre 2.8 MHz et 3 MHz en fonction de la position du rotor, comme cela est représenté schématiquement à la figure 2. On constate que cette variation est sensiblement indépendante de la vitesse de rotation du rotor ou de la valeur du courant d'alimentation fourni au moteur. On observe donc une variation périodique de l'inductance effective des enroulements du moteur électrique essentiellement en fonction de la position du rotor. L'homme du métier peut concevoir un circuit électronique pour mesurer la fréquence d'un oscillateur du type représenté à la figure 1 pour en déduire une information relative à la position angulaire du rotor. La demande internationale WO-A-2004 00631 du même inventeur utilise la mesure de la variation de fréquence de deux oscillateurs associés aux enroulements statoriques. Pour de plus amples explications au sujet du circuit électronique de la figure 1, on se référera également à la demande de brevet européen EP 99125017.6 dont la priorité est revendiquée. Dans cette demande de brevet européen, il est également décrit des réalisations du rotor telles que représentées ici aux figures 3 et 4 pour augmenter la variation périodique de l'inductance effective des enroulements en fonction de la position angulaire du rotor.

Sur les figures 3 et 4 sont représentées deux variations de réalisation d'un rotor 3A et 3B équipant un moteur électrique auquel est associé un système de détection de position angulaire selon l'invention. La Demanderesse a observé que l'agencement d'un métal, notamment amagnétique, de manière partielle à la surface de l'aimant permanent du rotor permet d'augmenter la variation périodique des inductances effectives des enroulements statoriques. Le rotor 3A présente deux bandes métalliques 5 décalées de 180°, seule une des deux bandes étant visible à la figure 3. Le rotor 3B présente un cylindre métallique 6 entourant l'aimant permanent 4 et dans lequel sont prévues deux lignées de trous 7 agencés axialement et décalées également de 180°. Dans cette variante représentée à titre d'exemple nullement limitatif, l'axe magnétique N-S aligné sur la direction radiale des trous 7. Pour des plus amples détails, nous renvoyons également à la demande de brevet européen susmentionnée.

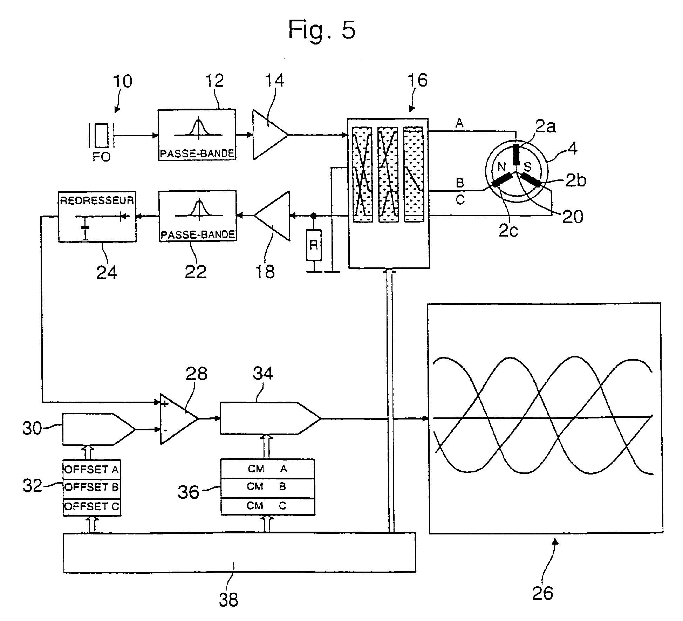

A l'aide de la figure 5, on décrira ci-après un premier mode de mise en oeuvre du procédé selon l'invention et du système permettant sa mise en oeuvre.

Un générateur de fréquence 10 fournit à travers un filtre passe-bande 12 un signal alternatif ayant une fréquence déterminée, lequel est fourni sélectivement à une première extrémité de l'un des trois enroulements statoriques 2a, 2b et 2c. Ensuite, on récupère un signal de mesure par l'intermédiaire d'un autre de ces enroulements qui est relié à la seconde extrémité de l'enroulement dans lequel le signal alternatif est fourni. Ce signal de mesure est fourni à des moyens de traitement électronique comprenant un amplificateur 18 à l'entrée duquel est prévu une résistance R. Etant donné que l'impédance d'entrée de l'amplificateur 18 est très élevée, la résistance R de valeur moindre sert à abaisser l'impédance à l'entrée de cet amplificateur pour éviter l'apparition d'un bruit parasite dans le signal de mesure. On notera toutefois que la résistance R est largement supérieure à la résistance d'un enroulement de sorte que le signal de tension formant le signal de mesure à l'entrée du transistor 18 correspond sensiblement à la tension du signal ayant la fréquence dudit signal alternatif au point milieu 20 des trois enroulements statoriques.

Afin d'obtenir un signal de mesure le plus propre possible, celui-ci passe à travers un filtre passe-bande 22 à la sortie duquel on observe un signal alternatif dont l'enveloppe présente une modulation qui est fonction de la position angulaire du rotor. Afin d'extraire l'information relative à cette position angulaire, le signal mesuré passe de manière classique à travers un redresseur 24 pour obtenir un signal électrique correspondant à l'enveloppe susmentionnée. Etant donné que le signal alternatif est envoyé successivement, de manière cyclique, sur les trois phases A, B et C du moteur électrique, on obtient trois signaux de mesure qui définissent trois courbes lors de la rotation du rotor, ces courbes présentant une forme sensiblement sinusoïdale et déphasées de 120° comme cela apparaît dans la fenêtre 26. Toutefois, on a constaté qu'étant donné que les trois enroulements statoriques ne sont pas toujours identiques, les trois courbes de mesure obtenues présentent un offset et une amplitude différents. Ainsi, il est prévu des moyens permettant de corriger l'offset et l'amplitude de chaque courbe. Ces moyens comprennent un amplificateur opérationnel sommateur 28 à une entrée duquel est fourni le signal mesuré, alors qu'un signal d'offset spécifique pour chacune des trois phases A, B et C est fourni à sa seconde entrée par l'intermédiaire d'un convertisseur digital-analogique 30. Les offsets spécifiques des trois phases sur lesquelles on effectue des mesures sont mémorisés dans un registre 32. Finalement, le signal mesuré est fourni à un convertisseur digital-analogique multiplicateur 34 dont le coefficient de multiplication CM est sélectionné spécifiquement pour chacune des trois phases dans un registre 36. L'actionnement des interrupteurs analogiques 16 et la sélection de l'offset et du coefficient du multiplicateur CM sont effectués simultanément de manière cyclique à l'aide d'une électronique de commande 38.

Ainsi, à l'aide des trois courbes de mesure définissant trois valeurs de mesure pour chaque position angulaire du rotor, il est possible de déterminer précisément cette position angulaire. Dans le cas où les courbes sont sensiblement sinusoïdales, une telle détermination peut se faire de manière numérique sans grande difficulté. Si tel n'est pas le cas, des méthodes permettant de déterminer efficacement la position angulaire du rotor seront décrites ci-après dans le cadre du mode de réalisation préféré de l'invention.

Une étude de la sensibilité du système décrit ci-avant pour la mise en oeuvre du procédé de détection de la position angulaire selon l'invention a montré qu'il présente certains inconvénients. Premièrement, les circuits électroniques permettant d'obtenir trois courbes de mesure présentant un même offset et une même amplitude sont relativement complexes. Ensuite, l'environnement du système, notamment les câbles électriques associés au moteur, modifie de cas en cas la modulation d'amplitude mesurée et l'offset des courbes de mesure. Ainsi, on décrira ci-après un deuxième mode de mise en oeuvre préféré de l'invention et de réalisation du système électronique qui lui est associé dans lequel on exploite une modulation de phase.

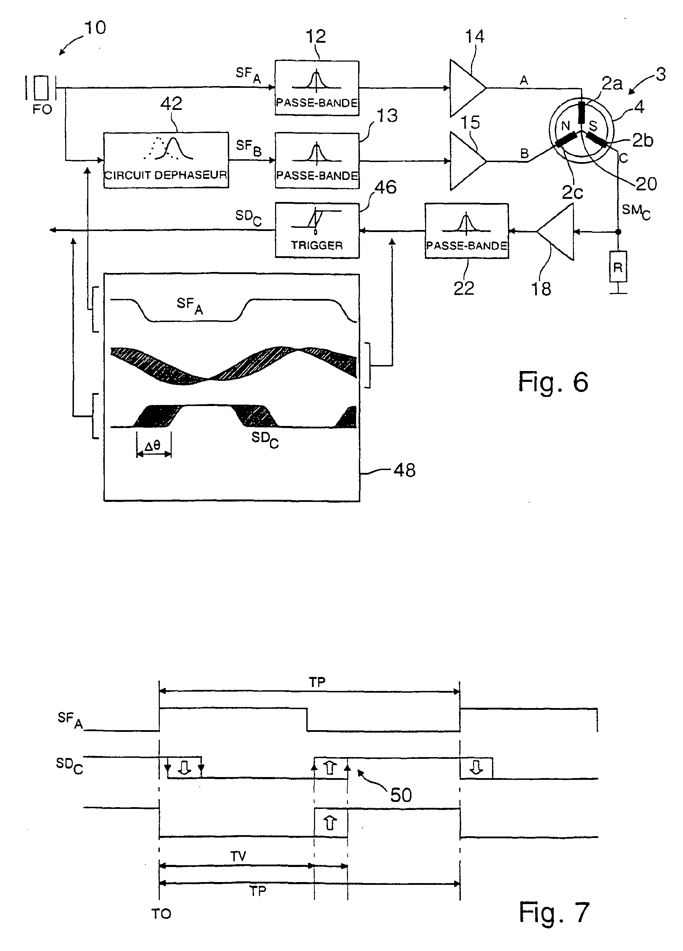

Selon le mode de mise en oeuvre du procédé préféré de l'invention qui sera décrit ci-après à l'aide des figures 6 à 10, il est prévu de fournir simultanément un premier signal $SF_A$ sur une première phase du moteur, c'est-à-dire à une première entrée d'un enroulement statorique et un deuxième signal alternatif $SF_B$ de même fréquence FO à une deuxième phase, c'est-à-dire à une première extrémité d'un deuxième enroulement. Le signal $SF_B$ est déphasé relativement au signal $SF_A$ au moyen d'un circuit déphaseur 42. Le déphasage entre ces deux signaux alternatifs est prédéfini. Ces signaux $SF_A$ et $SF_B$ sont fournis aux premières extrémités de deux enroulements à travers des circuits passe-bande 12 et 13 et des amplificateurs 14 et 15 comme dans le premier mode de réalisation décrit ci-avant.

Par l'intermédiaire du troisième enroulement associé à la troisième phase du moteur, on récupère un signal de mesure $SM_C$ qui est fourni à des moyens de traitement électronique, notamment un convertisseur, pour extraire l'information due à la variation périodique des inductances en fonction de la position angulaire du rotor. Le signal de mesure $SM_c$ est formé par un mixage des signaux reçus au point 20 de liaison électrique entre les trois enroulements statoriques. En réponse aux premier et deuxième signaux alternatifs $SF_A$ et $SF_B$, on récupère donc un signal de mesure en tension dont la fréquence correspond à la fréquence FO de ces signaux $SF_A$ et $SF_B$. Le signal $SM_c$ est amplifié et filtré à la fréquence FO avant d'être fourni à un trigger 46 qui fournit alors un signal digitalisé $SD_C$, image du signal de mesure $SM_C$.

Dans la fenêtre 48 sont représentés le signal fourni $SF_A$ et l'enveloppe des signaux de mesure $SM_C$ amplifiés pour une demi-révolution de l'aimant bipolaire 4 du rotor 3. On observe ainsi que la phase du signal $SM_C$ relativement au signal alternatif $SF_A$ varie en fonction de la position angulaire $\alpha$ du rotor entre deux valeurs extrêmes définissant un déphasage maximum de $\Delta\theta$. Le trigger 46, en digitalisant les courbes sensiblement sinusoïdales du signal $SM_C$, permet de mesurer la variation du déphasage entre le signal fourni $SF_A$ et le signal de mesure $SM_C$ comme cela est représenté schématiquement à la figure 7. Le signal alternatif $SF_A$ a une période temporelle TP dont le flanc montant définit un temps initial T0 de référence. Le signal de mesure digitalisé $SD_C$ présente un flanc montant 50 intervenant après un intervalle de temps variable TV depuis le temps initial T0.

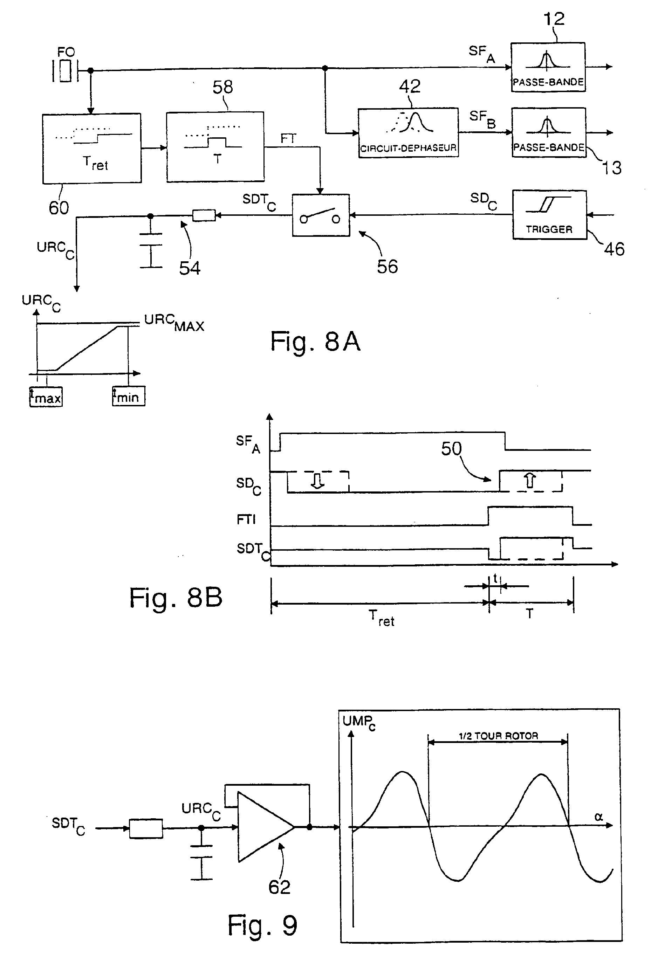

C'est la variation de l'intervalle TV qui contient une information relative à la variation des inductances effectives. Pour exploiter au mieux cette information, deux mesures sont prévues, comme représenté à la figure 8A. Premièrement, il est prévu un circuit RC 54 servant à fournir une tension proportionnelle au rapport TV/TP. Pour augmenter la variation du signal de tension $URC_C$, il est prévu en plus d'introduire une porte tri-state 56 pour enfermer la variation de la position du flanc montant 50 dans une fenêtre temporelle T dont la valeur est un peu supérieure à la variation maximale de TV. Ainsi, la variation du signal $URC_C$ varie sensiblement entre une valeur faible et une valeur proche de URCmax. La fenêtre temporelle intervient après un temps de retard $T_{ret}$ prédéfini. La porte tri-state 56 est actionnée par un signal de commande FT fourni au travers d'un circuit 58 "one shoot" par un circuit de retard 60. Les circuits 58 et 60 sont connus de l'homme du métier. Sur la figure 8B sont représentés les divers signaux intervenant dans le traitement du signal de mesure pour mesurer sa variation de phase. Les moyens de traitement électronique définissent donc un discriminateur de phase et fournissent un signal en tension dont la variation correspond à la variation de phase du signal de mesure $SM_C$. Comme représenté à la figure 9, il est prévu encore de fournir le signal $URC_C$ à un amplificateur opérationnel 62 de manière à diminuer l'impédance du signal de mesure à la sortie de cet amplificateur opérationnel. On obtient ainsi un signal $UMP_C$ variable en fonction de la position angulaire du rotor et présentant une période correspondant à un demi-tour de rotation de ce rotor. Ainsi, le signal mesuré et traité permet d'obtenir une courbe présentant une variation périodique et ayant une forme qui s'apparente à une courbe sinusoïdale.

On notera que le déphasage introduit par le circuit 42 entre les deux signaux fournis pour la mesure a une valeur située de préférence entre 140 et 160°. Cette plage de valeurs correspond à un compromis entre une variation optimale de la phase du signal mesuré et sa tension.

Pour mesurer efficacement la position angulaire du rotor et en particulier le sens de rotation, il est nécessaire d'avoir au moins deux courbes de mesure déphasées l'une relativement à l'autre. Pour ce faire, on procède de manière similaire au premier mode de réalisation décrit précédemment à la figure 5 en fournissant les premier et deuxième signaux alternatifs de manière cyclique et successivement à deux des trois enroulements statoriques de manière à obtenir trois signaux de mesure dont l'évolution en fonction de la position du rotor définissent respectivement trois courbes de mesure déphasées de 120° l'une par rapport aux autres. Dans le présent cas, on récupère successivement des signaux de mesure sur chacune des trois phases A, B et C en fournissant les deux signaux alternatifs déphasés dans les deux autres phases. L'homme du métier sait réaliser les circuits permettant de récupérer, de manière cyclique et successivement dans des intervalles de temps relativement courts, les trois signaux de mesure aux secondes extrémités des trois enroulements statoriques définissant les trois phases du moteur électrique. Pour ce faire, il est possible d'utiliser notamment des amplificateurs opérationnels avec une sortie tri-state à haute impédance, par exemple du type CLC430 de la société National. Un tel ensemble d'interrupteurs peut être commandé par un circuit de commutation "FPGA" du type XC4008 de la société Xilinx.

Ainsi, pour chaque position angulaire du rotor, il est possible d'obtenir trois signaux de mesure. La rotation du rotor permet de définir par des mesures successives trois courbes de mesure périodiques générées par la modulation de phases ou variation du déphasage de ces signaux de mesure dans les trois enroulements du moteur électrique en fonction de la position angulaire de l'aimant permanent du rotor.

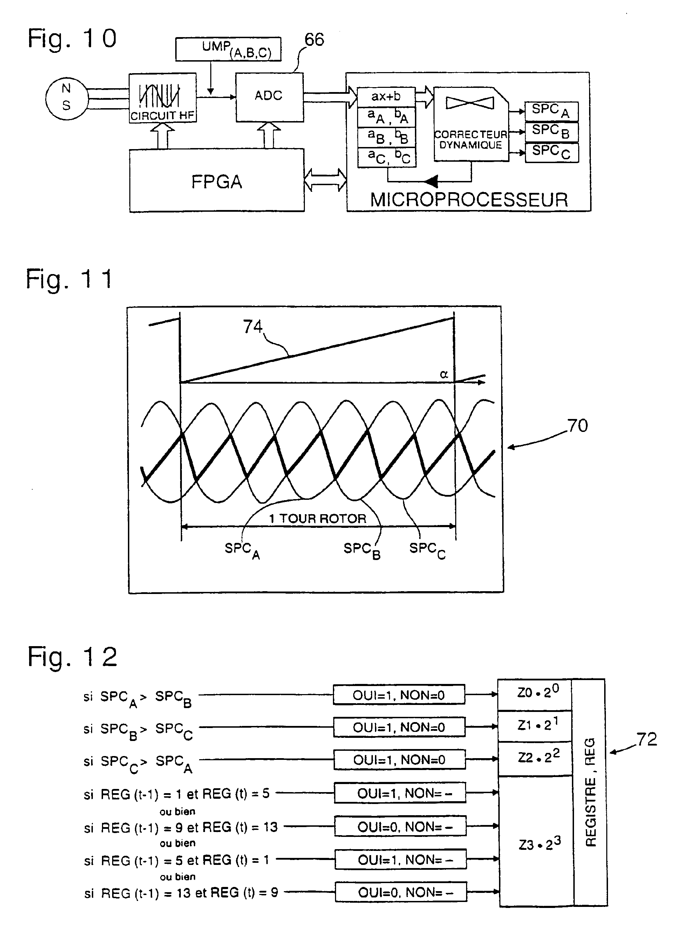

Etant donné une légère dissymétrie entre les trois phases, il est proposé, à l'aide d'un correcteur dynamique, de corriger les signaux de mesure de manière que les courbes de mesure engendrées présentent un même offset et une même amplitude (voir figure 10). Pour ce faire, le signal UMP fourni par chacune des trois phases est fourni à un convertisseur 66 également commandé par le circuit de commutation FPGA mentionné ci-avant. La correction dynamique est effectuée à l'aide d'un microprocesseur qui fournit des valeurs de mesure corrigées SPC pour chacune des trois phases. On obtient ainsi comme représenté à la figure 11 trois courbes SPC$_A$, SPC$_B$ et SPC$_C$ déphasées de 120°.

Dans le cadre de la présente invention, une méthode de détermination précise et efficace de la position du rotor a été conçue. Cette méthode sera exposée ci-après à l'aide des figures 11 à 14. On a observé que dans les régions de crête des courbes de mesure, étant donné la pente relativement faible, la précision de mesure diminue. Pour s'affranchir de ces régions, il est prévu selon l'invention de sélectionner, pour une position donnée du rotor, le signal de mesure parmi les trois signaux de mesure dont la valeur est située entre les valeurs des deux autres signaux de mesure ou est égale à la valeur de l'un de ces deux autres signaux de mesure. Ceci revient à dire que l'on sélectionne pour une position angulaire donnée une seule valeur de mesure située sur un segment de la courbe en zigzag 70 défini par le trait gras à la figure 11. Sur une demi-révolution du rotor, la position angulaire est définie de manière univoque à l'aide d'un algorithme pour la sélection du segment de la courbe 70, donné à la figure 12 dans les trois premières lignes. En effet, pour une valeur de mesure donnée par un des segments de la courbe 70 appartenant à une phase déterminée, cette valeur peut correspondre sur un demi-tour seulement à deux positions angulaires. Or, pour ces deux positions angulaires, les deux valeurs prises par l'un des deux autres signaux de mesure sont respectivement inférieure et supérieure à ladite valeur de la courbe 70. Les quatre dernières conditions données dans l'algorithme défini à la figure 12, pour déterminer le rang du segment de la courbe en zigzag 70 sur un tour complet du rotor, tiennent compte de l'évolution temporelle des signaux de mesure. En d'autres termes, on garde en mémoire la valeur REG mise dans un registre 72 au temps t-1 et on observe l'évolution de la valeur REG à un temps t permettant de distinguer deux demi-tours successifs selon l'état logique du bit z3. Ainsi, en donnant un rang différent à chaque segment de la courbe 70 sur un tour de rotation du rotor, il est alors possible de déterminer, pour une valeur de mesure sélectionnée sur l'un des segments de la courbe 70 dont le rang est déterminé, la position angulaire du rotor de manière univoque sur un tour complet, comme cela est représenté par la courbe 74 à la figure 11.

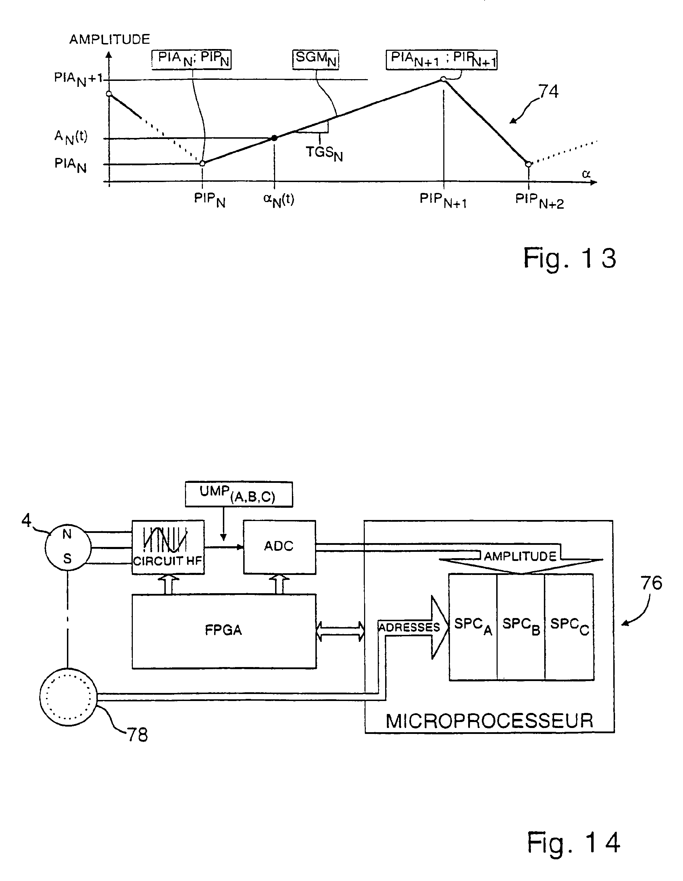

Pour déterminer la valeur de la position angulaire en fonction de la valeur de mesure sélectionnée sur la courbe en zigzag 70, il est proposé deux variantes. La première variante définit une méthode analytique représentée schématiquement à la figure 13. Pour un moteur électrique donné ou un type de moteur particulier, on définit une courbe de référence en zigzag correspondant à la courbe 70. Cette courbe de référence est donnée à l'aide d'une formule analytique.

Dans la variante proposée à la figure 13, la courbe de référence en zigzag 74 est formée d'une succession de segments linéaires définissant une approximation de la courbe réelle correspondante. Ainsi, les segments de la courbe 70 sont associés dans la courbe de référence à des segments linéaires dont les paramètres sont définis par exemple à l'aide d'une régression linéaire sur les courbes de mesure réelles obtenues pour le moteur ou le type de moteur considéré. Pour chaque segment linéaire SGM$_N$ de rang N, des points extrêmes (PIP$_N$; PIA$_N$) et (PIP$_{N+1}$; PIA$_{N+1}$) et la pente TGS$_N$ sont prédéfinis et introduits dans les moyens de traitement électronique. Pour un segment dont le rang N est déterminé, la position angulaire $\alpha_N(t)$ en fonction de la valeur de mesure A$_N(t)$ est donnée par la formule analytique suivante :

$$\alpha_N(t) = \frac{A_N(t) - PIA_N}{TGS_N} + PIP_N$$

La deuxième variante pour déterminer la position angulaire consiste en une méthode comparative. Il est prévu d'introduire dans une table de correspondance 76 une pluralité de valeurs de référence définissant une courbe de référence sur au moins une demi-révolution du rotor. A chaque valeur de référence correspond une valeur prédéfinie de position angulaire du rotor également stockée dans la table 76. Une fois le segment de la courbe 70 déterminé, la position angulaire est obtenue en déterminant quelle est la valeur de référence la plus proche de la valeur de mesure sélectionnée.

Pour définir les valeurs de référence susmentionnée, on peut utiliser un encodeur de position 78 et les courbes UMP obtenues pour chaque phase en les digitalisant au moyen d'un convertisseur 80 comme montré schématiquement à la figure 14.

Finalement, bien que les modes de mise en oeuvre du procédé selon l'invention ont été décrits en se référant à des moteurs avec des enroulements statoriques agencés en étoile, ce procédé s'applique de même à un branchement triangulaire des enroulements statoriques.

## Revendications

1. Procédé de détermination de la position angulaire du rotor à aimant permanent d'un moteur électrique polyphasé comprenant des enroulements statoriques, dans lequel :

   - on fournit un premier signal alternatif, ayant une première fréquence déterminée, à une première extrémité d'au moins un premier desdits enroulements,
   - on récupère un signal de mesure, par des moyens conducteurs reliés à une seconde extrémité dudit au moins un premier enroulement, qui est fourni à des moyens de traitement électronique agencés pour extraire de ce signal de mesure une information relative à une variation périodique de l'inductance effective dudit au moins un premier enroulement en fonction de ladite position angulaire du rotor,

   **caractérisé en ce que** ledit premier signal alternatif est fourni successivement et de manière cyclique aux premières extrémités respectives d'au moins deux desdits enroulements, lesdits moyens de traitement électronique récupérant aux deuxièmes extrémités respectives de ces au moins deux enroulements des signaux de mesure déphasés qui permettent ensemble de déterminer une position angulaire quelconque dudit rotor.

2. Procédé selon ta revendication 1, **caractérisé en ce que** ledit premier signal alternatif est fourni successivement de manière cyclique dans des intervalles de temps relativement court.

3. Procédé selon la revendication 1 ou 2, **caractérisé en ce qu'**il est prévu, pour fournir ledit premier signal, un ensemble d'interrupteurs commandés par un circuit de commutation, notamment du type "FPGA".

4. Procédé selon l'une des revendications précédentes, **caractérisé en ce que** lesdits moyens de traitement électronique sont agencés pour mesurer une modulation d'amplitude dudit signal de mesure qui est fonction de ladite variation périodique de ladite inductance effective.

5. Procédé selon l'une des revendications 1 à 3, **caractérisé en ce qu'**on fournit, simultanément audit premier signal alternatif, un deuxième signal alternatif déphasé, ayant ladite première fréquence, à une première extrémité d'un deuxième desdits enroulements dont la seconde extrémité est reliée électriquement auxdits moyens de traitement électronique, lesquels sont agencés pour déterminer un déphasage entre un des premier et deuxième signaux alternatifs et ledit signal de mesure qui est formé par un mixage des signaux reçus aux secondes extrémités desdits premier et deuxième enroulements en réponse aux premier et deuxième signaux alternatifs fournis, ledit déphasage étant fonction de ladite variation périodique de ladite inductance effective.

6. Procédé selon la revendication 5, dans lequel ledit moteur électrique est triphasé et comprend trois enroulements associés respectivement aux trois phases, **caractérisé en ce qu'**on fournit lesdits premier et deuxième signaux alternatifs de manière cyclique et successivement à deux des trois enroulements de manière à obtenir trois signaux de mesure dont l'évolution en fonction de la position du rotor définit respectivement trois courbes de mesure s'apparentant à des courbes sinusoïdales déphasées de 120° l'une par rapport aux autres.

7. Procédé selon la revendication 6, **caractérisé en ce que** lesdits moyens de traitement électronique sont agencés pour corriger l'amplitude et l'offset de chaque courbe de mesure de manière à obtenir trois courbes de mesure corrigées présentant une même amplitude et centrées sur une même valeur moyenne.

8. Procédé selon la revendication 6 ou 7. **caractérisé en ce que** lesdits moyens de traitement électronique :

   - sélectionnent, pour une position donnée du rotor, le signal de mesure parmi lesdits trois signaux de mesure dont la valeur ou la valeur corrigée est située entre les valeurs ou valeurs corrigées des deux autres signaux de mesure ou est égale à la valeur ou valeur corrigée de l'un de ces deux autres signaux de mesure, ladite valeur ou valeur corrigée dudit signal sélectionné définissant la valeur de mesure;
   - déterminent le rang du segment de courbe parmi la pluralité de segments formant une courbe en zigzag correspondant à l'ensemble des valeurs de mesure susceptibles d'être sélectionnées sur une période correspondant à une rotation complète du rotor;
   - déterminent, pour la valeur de mesure sélectionnée et le segment de rang déterminé, de manière univoque la valeur de ladite position angulaire.

9. Procédé selon la revendication 8, **caractérisé en ce que** lesdits moyens de traitement électronique comprennent dans une mémoire les paramètres prédéfinis d'une formule analytique définissant une courbe de référence en zigzag, ladite détermination de ladite position angulaire étant effectuée par un algorithme calcul en introduisant ladite valeur de mesure dans ladite formule analytique.

10. Procédé selon la revendication 9, **caractérisé en ce que** ladite courbe de référence en zigzag est formée par une succession de segments linéaires.

11. Procédé selon la revendication 8, **caractérisé en ce que** lesdits moyens de traitement électronique comprennent une table de correspondance dans laquelle sont introduites une pluralité de valeurs de référence prédéfinies, une valeur prédéfinie de position angulaire pour chaque valeur de référence étant introduite dans cette table de correspondance, ladite position angulaire étant obtenue en déterminant quelle est la valeur de référence la plus proche de ladite valeur de mesure.

12. Procédé selon l'une des revendications précédentes, **caractérisé en ce que** lesdits moyens de traitement électronique sont agencés pour suivre l'évolution de la rotation du rotor de manière à fournir de manière univoque la position angulaire du rotor sur une plage de 360°.


**Claims**

1. Method for determining the angular position of the permanent magnet rotor of a multiphase electric motor including at least two stator coils, wherein :

   - a first alternating signal is supplied, having a first determined frequency, to a first end of at least a first of said coils,
   - a measurement signal is recuperated, via conductor means connected to a second end of said at a least first coil, which is supplied to electronic processing means arranged to extract from said measurement signal data relating to a periodic variation in the effective inductance of said at least a first coil as a function of said angular position of the rotor,

   **characterised in that** said first alternating signal is supplied successively and cyclically to the respective first ends of at least two of said coils, said electronic processing means recuperating, from the respective second ends of said at least two coils, offset measurement signals, which together allow determining any angular position of said rotor.

2. Method according to claim 1, **characterized in that** said first alternating signal is supplied successively and cyclically in relatively short time intervals.

3. Method according to claim 1 or 2, **characterized in that** a set of switches controlled by a switching circuit, in particular of the "FPGA" type, is provided to supply said first signal.

4. Method according to any of the preceding claims, **characterized in that** said electronic processing means are arranged to measure an amplitude modulation of said measurement signal which is a function of said periodic variation of said effective inductance.

5. Method according to any of claims 1 to 3, **characterized in that** a second offset alternating signal, having said first frequency, is supplied simultaneously with said first alternating signal, to a first end of a second of said coils, the second end of which is electrically connected to said electronic processing means, which are arranged to determine a phase shift between one of the first and second alternating signals and said measurement signal, which is formed by mixing the signals received at the second ends of said first and second coils in response to the first and second alternating signals supplied, said phase shift being a function of said periodic variation of said effective inductance.

6. Method according to claim 5, wherein said electric motor is a three-phase motor and includes three coils respectively associated with three phases, **characterized in that** said first and second alternating signals are supplied cyclically and successively to two of the three coils so as to obtain three measurement signals whose evolution, as a function of the position of the rotor, respectively defines three measurement curves similar to sinusoidal curves offset by 120° with respect to each other.

7. Method according to claim 6, **characterized in that** said electronic processing means are arranged to correct the amplitude and offset of each measurement curve so as to obtain three corrected measurement curves having the same amplitude and centred on the same mean value.

8. Method according to claim 6 or 7, **characterized in that** said electronic processing means:

   - select, for a given position of the rotor, the measurement signal from said three measurement signals whose value or corrected value is situated between the values or corrected values of the two other measurement signals or is equal to the value or corrected value of one of these two other measurement values, said value or corrected value of said selected signal defining the measurement value;
   - determine the rank of the curve segment from the plurality of segments forming a zigzag curve corresponding to all measurement values capable of being selected over a period corresponding to a complete rotation of the rotor;
- determine, for a selected measurement value and the segment of determined rank, univocally the value of said angular position.

9. Method according to claim 8, **characterized in that** said electronic processing means include, in a memory, the predefined parameters of an analytical formula defining a reference zigzag curve, said determination of said angular position being effected by a calculation algorithm by introducing said measurement value into said analytical formula.

10. Method according to claim 9, **characterized in that** said reference zigzag curve is formed by a succession of linear segments.

11. Method according to claim 8, **characterized in that** said electronic processing means include a correspondence table into which a plurality of predefined reference values are introduced, a predefined angular position value for each reference value being introduced into said correspondence table, said angular position being obtained by determining which is the closest reference value to said measurement value.

12. Method according to any of the preceding claims, **characterized in that** said electronic processing means are arranged to follow the evolution of the rotation of the rotor so as to provide the angular position of the rotor univocally over a range of 360°.

**Patentansprüche**

1. Verfahren zum Bestimmen der Winkelposition des Permanentmagnet-Rotors eines mehrphasigen Elektromotors, der Statorwicklungen aufweist, wobei:

   - ein erstes Wechselspannungssignal, das eine erste bestimmte Frequenz hat, an ein erstes Ende wenigstens einer ersten der Wicklungen geliefert wird,
   - ein Messsignal durch Leitermittel, die mit einem zweiten Ende der wenigstens einen ersten Wicklung verbunden sind, wiedergewonnen und an elektronische Verarbeitungsmittel geliefert wird, die so beschaffen sind, dass sie aus diesem Messsignal eine Information bezüglich einer periodischen Veränderung der effektiven Induktivität der wenigstens einen ersten Wicklung in Abhängigkeit von der Winkelposition des Rotors extrahieren;

   **dadurch gekennzeichnet, dass** das erste Wechselspannungssignal nacheinander und zyklisch an die jeweiligen ersten Enden von wenigstens zwei der Wicklungen geliefert wird, wobei die elektronischen Verarbeitungsmittel an den jeweiligen zweiten Enden dieser wenigstens zwei Wicklungen phasenverschobene Messsignale wiedergewinnen, die zusammen ermöglichen, eine beliebige Winkelposition des Rotors zu bestimmen.

2. Verfahren nach Anspruch 1, **dadurch gekennzeichnet, dass** das erste Wechselspannungssignal nacheinander zyklisch in verhältnismäßig kurzen Zeitintervallen geliefert wird.

3. Verfahren nach Anspruch 1 oder 2, **dadurch gekennzeichnet, dass** zum Liefern des ersten Signals eine Gesamtheit von Ein/Aus-Schaltern vorgesehen ist, die durch eine Umschaltschaltung insbesondere des Typs "FPGA" gesteuert werden.

4. Verfahren nach einem der vorhergehenden Ansprüche, **dadurch gekennzeichnet, dass** die elektronischen Verarbeitungsmittel so beschaffen sind, dass sie eine Amplitudenmodulation des Messsignals, die von der periodischen Veränderung der effektiven Induktivität abhängt, messen.

5. Verfahren nach einem der Ansprüche 1 bis 3, **dadurch gekennzeichnet, dass** gleichzeitig mit dem ersten Wechselspannungssignal ein zweites, phasenverschobenes Wechselspannungssignal, das die erste Frequenz hat, an ein erstes Ende einer zweiten der Wicklungen geliefert wird, wovon das zweite Ende mit den elektronischen Verarbeitungsmitteln elektrisch verbunden ist, wobei jene so beschaffen sind, dass sie eine Phasenverschiebung zwischen dem ersten und dem zweiten Wechselspannungssignal und dem Messsignal, das durch Mischen jener Signale gebildet wird, die an den zweiten Enden der ersten und der zweiten Wicklung in Reaktion auf das erste und das zweite gelieferte Wechselspannungssignal empfangen werden, bestimmen, wobei diese Phasenverschiebung von der periodischen Veränderung der effektiven Induktivität abhängt.

6. Verfahren nach Anspruch 5, bei dem der Elektromotor dreiphasig ist und drei Wicklungen umfasst, die den drei entsprechenden Phasen zugeordnet sind, **dadurch gekennzeichnet, dass** das erste und das zweite Wechselspannungssignal zyklisch und nacheinander an zwei der drei Wicklungen geliefert werden, derart, dass drei Messsignale erhalten werden, deren Entwicklung in Abhängigkeit von der Position des Rotors drei entsprechende Messkurven definiert, die Sinuskurven ähneln, die relativ zueinander um 120° phasenverschoben sind.

7. Verfahren nach Anspruch 6, **dadurch gekenn-**

**zeichnet, dass** die elektronischen Verarbeitungsmittel so beschaffen sind, dass sie die Amplitude und den Versatz jeder Messkurve in der Weise korrigieren, dass drei korrigierte Messkurven erhalten werden, die dieselbe Amplitude besitzen und auf denselben Mittelwert zentriert sind.

8. Verfahren nach Anspruch 6 oder 7, **dadurch gekennzeichnet, dass** die elektronischen Verarbeitungsmittel:

   - für eine gegebene Position des Rotors dasjenige Messsignal unter den drei Messsignalen auswählen, dessen Wert oder dessen korrigierter Wert sich zwischen den Werten oder den korrigierten Werten der zwei anderen Messsignale befindet oder gleich dem Wert oder dem korrigierten Wert eines dieser zwei anderen Messsignale ist, wobei der Wert oder der korrigierte Wert des ausgewählten Signals den Messwert definiert;
   - den Rang des Kurvensegments unter den mehreren Segmenten, die eine Zickzack-Kurve bilden, die der Gesamtheit der Messwerte entsprechen, die in einer Periode, die einer vollständigen Drehung des Rotors entsprechen, ausgewählt werden können, bestimmen;
   - für den ausgewählten Messwert und das Segment mit dem bestimmten Rang auf eindeutige Weise den Wert der Winkelposition bestimmen.

9. Verfahren nach Anspruch 8, **dadurch gekennzeichnet, dass** die elektronischen Verarbeitungsmittel in einem Speicher im Voraus definierte Parameter einer analytischen Formel enthalten, die eine Referenz-Zickzack-Kurve definiert, wobei die Bestimmung der Winkelposition durch einen Rechenalgorithmus durch Eingeben des Messwertes in die analytische Formel ausgeführt wird.

10. Verfahren nach Anspruch 9, **dadurch gekennzeichnet, dass** die Referenz-Zickzack-Kurve durch eine Folge geradliniger Segmente gebildet ist.

11. Verfahren nach Anspruch 8, **dadurch gekennzeichnet, dass** die elektronischen Verarbeitungsmittel eine Korrespondenztabelle enthalten, in die die mehreren im Voraus definierten Referenzwerte eingetragen sind, wobei ein im Voraus definierter Winkelpositionswert für jeden Referenzwert in diese Korrespondenztabelle eingetragen wird, wobei die Winkelposition durch Bestimmen jenes Referenzwertes, der sich am nächsten bei dem Messwert befindet, erhalten wird.

12. Verfahren nach einem der vorhergehenden Ansprüche, **dadurch gekennzeichnet, dass** die elektronischen Verarbeitungsmittel so beschaffen sind, dass sie der Entwicklung der Drehung des Rotors folgen, derart, dass sie auf eindeutige Weise die Winkelposition des Rotors in einem Bereich von 360° liefern.

Fig. 1

Fig. 2

$f_A = \approx 3MHz$          $f_A = \approx 2.8MHz$          $f_A = \approx 3MHz$          $f_A = \approx 2.8MHz$

Fig. 3

3A

Fig. 4

3B

# Fig. 5

Fig. 6

Fig. 7

Fig. 8A

Fig. 8B

Fig. 9

Fig. 1 0

UMP$_{(A,B,C)}$    66

N S    CIRCUIT HF    ADC    ax+b
                              a$_A$ , b$_A$    CORRECTEUR DYNAMIQUE    SPC$_A$
                              a$_B$ , b$_B$                            SPC$_B$
                              a$_C$ , b$_C$                            SPC$_C$

FPGA    MICROPROCESSEUR

Fig. 1 1

74    α    70

1 TOUR ROTOR

SPC$_A$    SPC$_B$    SPC$_C$

Fig. 1 2

si SPC$_A$ > SPC$_B$ ———— OUI=1, NON=0 ——→ Z0 • $2^0$

si SPC$_B$ > SPC$_C$ ———— OUI=1, NON=0 ——→ Z1 • $2^1$    72

si SPC$_C$ > SPC$_A$ ———— OUI=1, NON=0 ——→ Z2 • $2^2$

si REG (t-1) = 1 et REG (t) = 5 ———— OUI=1, NON= –
    ou bien
si REG (t-1) = 9 et REG (t) = 13 ———— OUI=0, NON= –
    ou bien                                                    Z3 • $2^3$
si REG (t-1) = 5 et REG (t) = 1 ———— OUI=1, NON= –
    ou bien
si REG (t-1) = 13 et REG (t) = 9 ———— OUI=0, NON= –

REGISTRE, REG

AMPLITUDE

PIA$_{N}$+1

PIA$_N$; PIP$_N$    SGM$_N$    PIA$_{N+1}$ ; PIP$_{N+1}$

A$_N$(t)

PIA$_N$

TGS$_N$

74

α

PIP$_N$    α$_N$(t)    PIP$_{N+1}$    PIP$_{N+2}$

## Fig. 13

UMP$_{(A,B,C)}$

4

N
S

CIRCUIT HF

ADC

AMPLITUDE

76

FPGA

ADRESSES    SPC$_A$ SPC$_B$ SPC$_C$

78

MICROPROCESSEUR

## Fig. 14